# EUROPEAN PATENT APPLICATION

(11) **EP 1 909 423 A1**
(43) Date of publication of application: **09.04.2008**
(21) Application number: 06757115.8
(22) Date of filing: 07.06.2006
(51) Int. Cl.: H04J 11/00, H04B 7/08, H04B 7/12

(54) **RECEIVER APPARATUS**

(30) Priority: 27.07.2005 JP 2005217760
(71) Applicant: Pioneer Corporation, Tokyo 153-8654 (JP)
(72) Inventor: NAKAMURA, Shigeki, Kawagoe Koujou, Pioneer Corp., Kawagoe-shi, Saitama 350-8555 (JP)
(74) Representative: Sajda, Wolf E.
(86) International application number: PCT/JP2006/311408
(87) International publication number: WO 2007/013224

(57) **Abstract**

A receiver is provided which can make full use of its two receiver branches and be reduced in size.

The receiver includes a receiver branch (RXA) for outputting a baseband signal (Ba), a receiver branch (RXB) for outputting a baseband signal (Bb), an adder (15), a switching section (18), OFDM demodulator sections (16a and 16b), and a shared memory (MEM) provided as a work area used for the OFDM demodulator sections (16a and 16b) to perform time deinterleaving. When the same physical channel is received in the receiver branches (RXA and RXB), the switching section (18) supplies the baseband signal (Bb) to the adder (15) to combine the baseband signals (Ba and Bb). Then, the OFDM demodulator section (16b) demodulates the resultant baseband signal (Sa) and performs time deinterleaving on the resulting signal using the shared memory (MEM) as a work area. When mutually different physical channels are received in the receiver branches (RXA and RXB), the switching section (18) selectively supplies the baseband signal (Bb) to the OFDM demodulator section (16b). Then, each of the OFDM demodulator sections (16a and 16b) demodulates the respective baseband signals (Ba and Bb), and performs time deinterleaving on the respective resulting signals using the shared memory (MEM) as a shared work area.

## Description

### TECHNICAL FIELD

The present invention relates to a receiver which receives OFDM digital broadcasts or the like.

### BACKGROUND ART

Recent years have seen the emergence of a new broadcast medium or the start of digital terrestrial broadcasting, following the BS digital broadcasting and the 110 CS digital broadcasting. The digital terrestrial broadcasting utilizes ground waves which are vulnerable to obstacles, and thus employs the OFDM (Orthogonal Frequency Division Multiplexing) scheme as a transmission path coding scheme which can provide good resistance to degradation due to fading or the like and a variety of services not only for fixed receivers but also for mobile receivers.

On the other hand, the digital terrestrial broadcasting in Japan is referred to as the ISDB-T (Integrated Services Digital Broad-casting for Terrestrial) scheme. Employed as the transmission path coding scheme is the BST-OFDM (Band Segmented Transmission - OFDM) scheme which is a type of the OFDM scheme. This scheme allows simultaneous transmission of a total of 13 segments, with one segment having a predetermined bandwidth (approximately 430 kHz), on the transmission band (6 MHz) of each physical channel.
This scheme also allows transmission path coding with a different transmission parameter for each one segment, and layered transmission or transmission in multiple layers (up to 3 layers) with different degrees of degradation resistance. For example, this makes it possible to provide simultaneous broadcasting (simulcasting) for fixed receivers and mobile receivers on one physical channel with a variety of services.

On the other hand, those receivers or among others, some mobile receivers for receiving the digital terrestrial broadcasting are known to include a diversity antenna for receiving the digital terrestrial broadcasting under better conditions (see Patent Document 1).

Fig. 1(a) is a block diagram illustrating the configuration of a typical conventional receiver which employs the same configuration as that of the receiver shown in Fig. 1 of Patent Document 1. The receiver includes multiple diversity antennas AT1 to ATn, an antenna switching section 1, tuner sections 2a and 2b, analog to digital converters 3a and 3b, FFT sections 4a and 4b, an adder 5, an OFDM demodulator section 6, and an MPEG decoder section 7. The receiver is configured such that the tuner section 2a and the analog to digital converter 3a, and the FFT section 4a form a first receiver branch A, and the tuner section 2b, the analog to digital converter 3b, and the FFT section 4b form a second receiver branch B.

The antenna switching section 1 seeks an antenna which provides, e.g., the maximum reception sensitivity, to selectively connect that antenna to the tuner sections 2a and 2b. In order to receive a broadcast of a channel number (physical channel) specified by a user or the like, the tuner sections 2a and 2b mix a local signal of the same frequency f1 and a received signal entered via the antenna switching section 1 to produce a frequency-converted intermediate-frequency signal (IF signal).
These IF signals are converted at the analog to digital converters 3a and 3b to a digital IF signal, which is then fast Fourier transformed at the FFT sections 4a and 4b into a so-called baseband signal, respectively. These baseband signals are summed (combined) at the adder 5, so that the resultant baseband signal Sadd is demodulated at the OFDM demodulator section 6. Then, the demodulated data is supplied to the MPEG decoder section 7 as a transport stream TS (MPEG-2TS) to be decoded to a signal such as an image or sound of the broadcast program for output.
Note that in actual circuits, a demultiplexer for separating the transport stream TS into packets to be supplied to the MPEG decoder section 7 is provided between the OFDM demodulator section 6 and the MPEG decoder section 7. However, the description was made without the demultiplexer for convenience of explanation.

Referring to Fig. 1(b), a description will be now made to the fundamental function of the OFDM demodulator section 6. To begin with, in an OFDM frame decoding section, the aforementioned resultant baseband signal Sadd is rearranged in the sequence of segments for output. After the synchronized detection or delayed detection of the rearranged baseband signal, frequency deinterleaving and time deinterleaving are performed. Subsequently, in a demapping section, the resulting signal is demodulated in accordance with the predetermined modulation scheme (QPSK, 16QAM, or 64QAM), and thereafter, deinterleaved in given bits at a bit deinterleaving section.
Then, the resulting signal is subjected to error correction decoding at a depuncture and Viterbi decoding section using a convolution code (inner code) for byte deinterleaving in bytes. After that, the signal thus obtained is subjected to inverse energy spreading and further to error correction decoding using the Reed-Solomon code (outer code), thereby reproducing the aforementioned transport stream TS for delivery to the MPEG decoder section 7.

According to the receiver configured in this manner including the conventional diversity antennas, the tuner sections 2a and 2b of the two branches simultaneously receive the same physical channel broadcast. Then, the two baseband signals delivered from the FFT sections 4a and 4b through the simultaneously reception are combined at the adder 5 and then demodulated at the OFDM demodulator section 6. It is thus possible to improve the C/N and receive digital terrestrial broadcasts in improved reception conditions.

Patent Document 1: Japanese Patent Application Laid-Open No. 2005-136 471.

### DISCLOSURE OF THE INVENTION

### PROBLEMS TO BE SOLVED BY THE INVENTION

In the aforementioned conventional receiver, the two receiver branches A and B that are capable of receiving broadcasts on separate physical channels are used to receive the same physical channel broadcast, and the outputs from the FFT sections 4a and 4b are combined at the adder 5 for subsequent demodulation. Accordingly, even though the conventional receiver has the two receiver branches A and B, it can receive only a broadcast on one physical channel, thus having an aspect of not making full use of its components.

For example, the receiver branch A may receive a broadcast selected by a user, and during its reception, the receiver branch B may receive station-specific service information (SI) such as an electronic program guide (EPG) that is separately sent from each broadcast station. The receiver thus may create an integrated electronic program table, which is made available for use by the user, to be pre-stored in storage means. This would make it possible to provide the user with an improved convenience.
However, the aforementioned station-specific service information (SI) such as the electronic program guide (EPG) is delivered by each broadcast station as their own service information. As shown in Fig. 1(a), the conventional receiver is configured to receive only the same one physical channel in the two receiver branches A and B.
Thus, while a broadcast desired by the user is being received in the receiver branch A, the station-specific service information (SI) such as an electronic program guide (EPG) from another broadcast station cannot be received in the receiver branch B to create an integrated electronic program table. As can be seen from above, the conventional receiver had an aspect of not making full use of the components.

In this context, to make full use of the two receiver branches A and B, as illustrated by way of example in Fig. 1(c), OFDM demodulator sections 6a and 6b and MPEG decoder sections 7a and 7b may be additionally coupled downstream of the receiver branches A and B, respectively. Then, the frequencies f1 and f2 of each local signal may be set to be able to receive mutually different physical channels at the tuner sections 2a and 2b. This configuration would allow for providing the user with an improved convenience as illustrated above.

However, such a configuration requires a time interleaving memory (referred to as "symbol buffer") MEM in each of the two branches for performing time deinterleaving to provide anti-fading performance in a time deinterleaving section shown in Fig. 1(b). As shown in Fig. 1(c), the OFDM demodulator sections 6a and 6b are thus provided with time interleaving memories MEMa and MEMb, respectively. Accordingly, an enormous memory capacity is required, thereby causing increases in size and parts count of the receiver.

That is, according to the configuration shown in Fig. 1(c), each interleaving section of the OFDM demodulator sections 6a and 6b stores each symbol period of symbol data from individual segments contained in one physical channel in order to perform time deinterleaving. Accordingly, the interleaving sections need to be provided with the time interleaving memories MEMa and MEMb which each have a storage capacity of 13 segments, respectively. Thus, an enormous storage capacity is required, thereby causing increases in size and parts count of the receiver.

The present invention was developed in view of these conventional problems. It is therefore an object of the present invention to provide a receiver which includes at least two receiver branches and which can offer a diversity function for providing a good reception condition and make full use of the components.

### MEANS FOR SOLVING THE PROBLEMS

The invention according to claim 1 provides a receiver which has two receiver branches and OFDM demodulator means corresponding to each of the receiver branches. The receiver includes: adder means for combining a baseband signal produced in the one receiver branch and a baseband signal produced in the other receiver branch and supplied via switching means for delivery to the one OFDM demodulator means; the switching means for exclusively and selectively supplying the baseband signal produced in the other receiver branch to the adder means or the other OFDM demodulator means; and shared memory means provided with a storage capacity required to perform time deinterleaving on one physical channel and a partial reception segment, the shared memory means serving as a work area for allowing the one and other OFDM demodulator means to perform time deinterleaving. The receiver is characterized in that, when the same physical channel is received in the two receiver branches, the switching means selectively supply the baseband signal produced in the other receiver branch to the adder means, and the one OFDM demodulator section performs time deinterleaving using the shared memory means as a work area. When mutually different physical channels are received in the two receiver branches, the switching means selectively supply the baseband signal produced in the other receiver branch to the other OFDM demodulator means and the one and other OFDM demodulator sections perform time deinterleaving using the shared memory means as a shared work area.

### BRIEF DESCRIPTION OF THE DRAWINGS

- Fig. 1: is a schematic block diagram illustrating the configuration of a conventional receiver;
- Fig. 2: is a block diagram illustrating the configuration of a receiver according to one embodiment; and
- Fig. 3: is a block diagram illustrating the configuration of a receiver according to an example.

### BEST MODE FOR CARRYING OUT THE INVENTION

With reference to Fig. 2, a description will now be given of a preferred embodiment of the present invention. Fig. 2(a) is a block diagram illustrating the configuration of a receiver according to the present embodiment.

In Fig. 2(a), a receiver 10 of the present embodiment receives OFDM digital broadcasting. The receiver 10 is configured to include an antenna switching section 11 connected with multiple diversity antennas ANT1 to ANTn, a first receiver branch RXA, a second receiver branch RXB, an adder 15, a switching section 18, OFDM demodulator sections 16a and 16b, MPEG decoder sections 17a and 17b, and a shared memory MEM.

Note that an actual circuit is configured to have a demultiplexer between the OFDM demodulator section 16a and the MPEG decoder section 17a to separate a transport stream TSa, which will be reproduced at the OFDM demodulator section 16a as discussed later, into packets for delivery to the MPEG decoder section 17a. Then, the coded image and sound data in each of the packets is decoded. However, for convenience of explanation, it is assumed that the MPEG decoder section 17a decodes the transport stream TSa, discussed later, which is reproduced at the OFDM demodulator section 16a.

On the other hand, a demultiplexer is also provided between the OFDM demodulator section 16b and the MPEG decoder section 17b to separate a transport stream TSb, which is to be reproduced at the OFDM demodulator section 16b as discussed later, into packets for delivery to the MPEG decoder section 17b. Then, the coded image and sound data in each of the packets is decoded. However, for convenience of explanation, it is assumed that the MPEG decoder section 17b decodes the transport stream TSb, discussed later, which is to be reproduced at the OFDM demodulator section 16b.
Also in the discussion of an example below, likewise for convenience of explanation, the description will be made using the same expression that the MPEG decoder section 17a decodes the transport stream TSa, and the MPEG decoder section 17b decodes the transport stream TSb.

The first receiver branch RXA has a tuner section 12a connected to the output end of the antenna switching section 11, an analog to digital converter (ADC) 13a, and a FFT section 14a. In this instance, the output end of the FFT section 14a is connected to the OFDM demodulator section 16a via the adder 15.

On the other hand, the second receiver branch RXB has a tuner section 12b connected to the output end of the antenna switching section 11, an analog to digital converter (ADC) 13b, and a FFT section 14b. In this instance, the output end of the FFT section 14b is connected with the input contact of the switching section 18, with one output contact X of the switching section 18 being connected to the adder 15 and the other output contact Y connected to OFDM demodulator section 16b.

The antenna switching section 11 searches for one of the multiple antennas ANT1 to ANTn which provides the best reception condition to selectively connect that antenna to the tuner sections 12a and 12b.

The tuner section 12a mixes the RF received signal (which has been received in the best reception condition) from the antenna switching section 11 with the local signal of the channel frequency f1 for frequency conversion. This allows for outputting an intermediate-frequency signal having a bandwidth of the physical channel corresponding to the channel frequency f1, i.e., an intermediate-frequency signal (IF signal) having a bandwidth of 13 segments. Then, the ADC 13a performs an analog to digital conversion on the IF signal to obtain a digital IF signal, which is in turn fast Fourier transformed at the FFT section 14a to thereby create a baseband signal Ba for output.

The tuner section 12b mixes the aforementioned RF received signal, which was supplied from the antenna switching section 11 and received in the best reception condition, with the local signal of the channel frequency f2 for frequency conversion. This allows for outputting an intermediate-frequency signal having a bandwidth of the physical channel corresponding to the channel frequency f2, i.e., an intermediate-frequency signal (IF signal) having a bandwidth of 13 segments. Then, the ADC 13b performs an analog to digital conversion on the IF signal to obtain a digital IF signal, which is in turn fast Fourier transformed at the FFT section 14b to thereby create a baseband signal Bb for output.

In this instance, if the aforementioned channel frequencies f1 and f2 are set to the same frequency, then the tuner sections 12a and 12b output an intermediate-frequency signal of the same physical channel, and the FFT sections 14a and 14b also output the baseband signals Ba and Bb of the same physical channel.

On the other hand, if the channel frequencies f1 and f2 are set to mutually different frequencies, then the tuner sections 12a and 12b output intermediate-frequency signals of mutually different physical channels, and the FFT sections 14a and 14b also output the baseband signals Ba and Bb of mutually different physical channels.

The switching section 18 has the output contacts X and Y for providing exclusive switching. When the channel frequencies f1 and f2 are set to the same frequency as described above, the switching section 18 is switched to the output contact X. This allows for transferring the baseband signal Bb delivered from the FFT section 14b to the adder 15 to be added to (combined with) the baseband signal Ba or the output from the FFT section 14a.

On the other hand, when the channel frequencies f1 and f2 are set to mutually different frequencies, the switching section 18 is switched to the output contact Y. This allows for supplying the baseband signal Bb delivered from the FFT section 14b to the OFDM demodulator section 16b as an input signal Sb.

When the channel frequencies f1 and f2 are set to the same frequency as described above, the adder 15 combines the baseband signal Ba from the FFT section 14a with the baseband signal Bb supplied from the FFT section 14b via the switching section 18. Then, the resultant baseband signal is supplied to the OFDM demodulator section 16a as an input signal Sa.

On the other hand, when the channel frequencies f1 and f2 are set to mutually different frequencies, the switching section 18 will no more transfer the baseband signal Bb from the FFT section 14b to the adder 15. The adder 15 supplies the baseband signal Ba from the FFT section 14a to the OFDM demodulator section 16a as the input signal Sa.

The OFDM demodulator sections 16a and 16b each have the same configuration as shown in Fig. 1(b).

However, the OFDM demodulator sections 16a and 16b are provided with the shared memory MEM as a work area for performing time deinterleaving.

To receive a high definition television (HDTV) broadcast which is transmitted in 13 segments, the shared memory MEM is formed to have a storage area of 1 physical channel (storage area of 13 segments) required to perform time deinterleaving and a partial reception storage area of 1 segment. That is, the shared memory MEM is not configured like the two time interleaving memories MEMa and MEMb being separately arranged as shown in Fig. 1(c).

That is, when making a layered transmission according to the digital broadcasting ARIB standards, the broadcast station is allowed to make a change to transmission parameters such as the modulation scheme, the number of carriers, and the effective symbol length. It is thus possible to select any one of mode 1, mode 2, and mode 3, which are indicative of these transmission parameters. Accordingly, to receive a broadcast that is layer-transmitted on a physical channel in any one of the mode 1, mode 2, and mode 3, a storage capacity for storing 13 segments of symbol data layer-transmitted on one physical channel is required for the OFDM demodulator section to perform time deinterleaving.
Thus, according to the conventional technique with the two OFDM demodulator sections 6a and 6b provided as shown in Fig. 1(c), the OFDM demodulator sections 6a and 6b were provided with the time interleaving memories MEMa and MEMb, respectively, (in other words, two in total), each of which had a capacity for storing 13 segments of symbol data to be used for time deinterleaving.

In contrast to this, to receive an HDTV broadcast transmitted in 13 segments, the shared memory MEM of the present embodiment provided for the OFDM demodulator sections 16a and 16b has about a half storage capacity of the total storage capacity of the time interleaving memories MEMa and MEMb shown in Fig. 1(c). More specifically, the shared memory MEM is formed of only a first storage area and a partial reception storage area (second storage area) for storing symbol data of 1 segment.
In this instance, the first storage area (shown as a first segment storage area through a thirteenth segment storage area in Fig. 2(a)) is set to the minimum storage capacity required to store symbol data of 13 segments which are necessary for time deinterleaving.

Then, upon time deinterleaving, the OFDM demodulator sections 16a and 16b share the shared memory MEM, thereby allowing the shared memory MEM to be reduced in storage capacity.

The MPEG decoder sections 17a and 17b receive the transport streams TSa and TSb which are reproduced at the OFDM demodulator sections 16a and 16b, respectively, and then perform the MPEG-2 video scheme-compliant decoding and the MPEG-2 AAC audio scheme-compliant decoding on the transport streams TSa and TSb. This allows for reproducing, for output as output signals Da and Db, the contents of a broadcast program transmitted from a broadcast station such as images, sound, data, and station-specific service information (SI) like an electronic program guide (EPG).

Now, a description will be made to an exemplary operation of the receiver of this embodiment configured in this manner.

### Operation with local signal having the same channel frequencies f1 and f2

Suppose that a user selects the channel number of a desired broadcast station for simultaneous reception in the two receiver branches RXA and RXB. In this case, the tuner sections 12a and 12b perform a frequency conversion based on the local signal of the same channel frequencies f1 and f2 corresponding to the selected channel number (physical channel) to output an intermediate-frequency signal (IF signal) of the same bandwidth to the ADCs 13a and 13b, respectively. Then, the FFT sections 14a and 14b output the same baseband signals Ba and Bb, respectively. Furthermore, the switching section 18 selectively connects to the output contact X to make the OFDM demodulator section 16b and the MPEG decoder section 17b disabled.

Then, the adder 15 sums (combines) the baseband signal Ba from the FFT section 14a and the baseband signal Bb supplied from the FFT section 14b via the switching section 18. Then, the resultant baseband signal Sa is supplied to the OFDM demodulator section 16a.

Such a resultant baseband signal Sa being supplied as an input signal to the OFDM demodulator section 16a causes the OFDM demodulator section 16a to perform a normal OFDM demodulation in the same manner as described referring to Fig. 1(b).

That is, the OFDM frame decoding section arranges the baseband signal Sa in the sequence of segments for synchronized detection or delayed detection of the resulting baseband signal. After that, the signal is subjected to frequency deinterleaving and time deinterleaving. Subsequently, the demapping section demodulates the resulting signal in accordance with a predetermined modulation scheme, and then the bit deinterleaving section deinterleaves the resulting signal in given bits.
Next, the depuncture and Viterbi decoding section performs error correction decoding using a convolution code (inner code) for byte deinterleaving in bytes and thereafter inverse energy spreading. Furthermore, an error correction is made using the Reed-Solomon code (outer code), thereby reproducing the aforementioned transport stream TSa, which is then supplied to the MPEG decoder 7a.

In this instance, when performing the aforementioned time deinterleaving, the OFDM demodulator section 16a uses the first storage area of the shared memory MEM as a work area to perform the time deinterleaving.

For example, as shown in Fig. 2(b), suppose that a simple moving image sent in a partial reception segment (segment in layer A) centered in the 13 segments and an HDTV broadcast program or standard television program sent in the remaining 12 segments (segments in layer B and layer C) are received. In this case, the OFDM demodulator section 16a uses the first storage area of the first segment storage area through the thirteenth segment storage area in the shared memory MEM for time deinterleaving.
On the other hand, an HDTV broadcast program may be transmitted in 13 segments without any simple moving image. In this case, the first storage area of the first segment storage area through the thirteenth segment storage area in the shared memory MEM is also used to perform time deinterleaving.

Then, the MPEG decoder 17a decodes the aforementioned transport stream TSa, thereby reproducing, for output as the output signal Da, the contents of a broadcast program transmitted from the broadcast station such as images, sound, data, and station-specific service information (SI) like an electronic program guide (EPG).

As such, when the channel frequencies f1 and f2 of the tuner sections 12a and 12b are the same, the tuner sections 12a and 12b in the two branches simultaneously receive the same physical channel broadcast. Then, the two baseband signals Ba and Bb delivered from the FFT sections 14a and 14b through the simultaneous receptions are combined at the adder 15 and then demodulated at the OFDM demodulator 16a. It is thus possible to improve the C/N and receive digital terrestrial broadcasts in improved reception conditions.

### Operation with local signal having mutually different channel frequencies f1 and f2

Suppose that the user selects the channel number of a desired broadcast station for reception in the receiver branch RXA. In this case, the switching section 18 switches to the output contact Y, so that the receiver branch RXB is disconnected from the adder 15 but connected to the OFDM demodulator section 16b.

Accordingly, the receiver branches RXA and RXB can receive the mutually different physical channels. Thus, the tuner section 12a of the receiver branch RXA is provided with a local signal of the channel frequency f1 corresponding to the selected channel number, while the tuner section 12b of the receiver branch RXB is provided with a local signal of the channel frequency f2 different from the channel frequency f1.

For example, suppose that station-specific service information (SI) such as an electronic program guide (EPG) sent separately from each broadcast station is received in the receiver branch RXB to create an integrated electronic program table which is made available for use by the user. In this case, to seek and receive the radio waves from each broadcast station, the channel frequency f2 is sequentially tuned to the channel frequency corresponding to the physical channel of each broadcast station. Additionally, for example, when the user tries to record another program on a different channel, the channel frequency f2 is set to the frequency at which the physical channel of the another program on the different channel is received.

In this manner, the channel frequencies f1 and f2 of the local signals for the tuner sections 12a and 12b are set to mutually different frequencies. Accordingly, in the receiver branch RXA, the tuner section 12a makes a frequency conversion based on the local signal of the channel frequency f1 corresponding to the channel number selected by the user, thereby delivering the intermediate-frequency signal (IF signal) to the ADC 13a. Furthermore, the FFT section 14a outputs the baseband signal Ba to be supplied to the OFDM demodulator section 16a via the adder 15.

Then, the baseband signal Ba being supplied as the input signal Sa to the OFDM demodulator section 16a causes the OFDM demodulator section 16a to perform the OFDM demodulation in the same manner as described referring to Fig. 1(b) and reproduces the transport stream TSa.

In this instance, when performing time deinterleaving, the aforementioned OFDM demodulator section 16a employs the first storage area of the shared memory MEM (the first segment storage area through the thirteenth segment storage area) as a work area to perform the time deinterleaving. That is, as shown in Fig. 2(b), the time deinterleaving is performed on an HDTV broadcast program or standard television program sent in the segments of layer B and layer C among the 13 segments. However, no time deinterleaving is performed on a simple moving image sent in the segment of layer A.

On the other hand, in the receiver branch RXB, the tuner section 12b makes a frequency conversion based on the local signal of the channel frequency f2 to thereby create the intermediate-frequency signal (IF signal) for output to the ADC 13b. Furthermore, the FFT section 14b outputs the baseband signal Bb to be supplied to the OFDM demodulator section 16b via the switching section 18.

Then, the baseband signal Bb being supplied as the input signal Sb to the OFDM demodulator section 16b causes the OFDM demodulator section 16b to perform the OFDM demodulation in the same manner as described referring to Fig. 1(b) and reproduces the transport stream TSb. Then, the MPEG decoder 17b decodes the transport stream TSb, allowing the contents of a broadcast program transmitted from the broadcast station such as images, sound, and data to be delivered as an output signal Db.

In this instance, when performing time deinterleaving, the aforementioned OFDM demodulator section 16b employs the partial reception storage area of the shared memory MEM (the second storage area in Fig. 2(a)) as a work area to perform the time deinterleaving. That is, as shown in Fig. 2(b), the time deinterleaving is performed on a simple moving image sent in the segment of layer A among the 13 segments.

That is, when the channel frequencies f1 and f2, of the local signals are set to mutually different frequencies, the OFDM demodulator section 16a uses the first storage area of the shared memory MEM to perform time deinterleaving, whereas the OFDM demodulator section 16b uses the partial reception storage area of the shared memory MEM as a work area to perform time deinterleaving.

As described above, according to the receiver 10 of the present embodiment, when the channel frequencies f1 and f2 of the tuner sections 12a and 12b are the same, the switching section 18 is switched to the output contact X, and the two receiver branches A and B receive the same physical channel to combine the two baseband signals Ba and Bb at the adder 15 for demodulation at the OFDM demodulator 16a. It is thus possible to improve the C/N and receive digital terrestrial broadcasts in improved reception conditions.

Furthermore, when the channel frequencies f1 and f2 of the tuner sections 12a and 12b are mutually different, the switching section 18 is switched to the output contact Y. This allows the OFDM demodulator section 16a to perform an OFDM demodulation on the baseband signal Ba delivered from the receiver branch A as well as the OFDM demodulator section 16b to perform an OFDM demodulation on the baseband signal Bb delivered from the receiver branch B.
Furthermore, each of the OFDM demodulator sections 16a and 16b shares the shared memory MEM to perform time deinterleaving, thereby making full use of the receiver branches A and B to receive broadcasts on different physical channels and reduce the storage capacity of the shared memory MEM.

Note that the above description was directed to the case of the channel frequencies f1 and f2 of the tuner sections 12a and 12b being mutually different, for example, where the receiver branch RXB receives station-specific service information (SI) such as an electronic program guide (EPG) sent separately from each broadcast station to create an integrated electronic program table which is made available for use by the user or for the user to record another program on a different channel. However, the receiver 10 of the present embodiment is also applicable to other usage with the channel frequencies f1 and f2 of the tuner sections 12a and 12b being mutually different.
Additionally, the above description was also directed to the embodiment of a simple moving image being broadcast in 1 segment. However, even when simple moving images are to be broadcast to mobile units in multiple segments in the future, part of the storage area of the shared memory MEM can be assigned to receive (time deinterleave) the broadcast in multiple segments, thereby significantly reducing the memory capacity.

### Example

Now, with reference to Fig. 3, a description will now be made to a more specific example. Fig. 3 is a block diagram illustrating the configuration of a receiver according to the present example, with the same or like portions as those of Fig. 2(a) being indicated with the same symbols.

In Fig. 3, like the receiver shown in Fig. 2(a), the receiver 10 includes the antenna switching section 11 connected with the multiple diversity antennas ANT1 to ANTn, the first receiver branch RXA, the second receiver branch RXB, the adder 15, the switching section 18, the OFDM demodulator sections 16a and 16b, the MPEG decoder sections 17a and 17b, and the shared memory MEM. The receiver 10 further includes a system controller 19 serving as control means to control the receiver 10 in accordance with an instruction from the user or the like.

The system controller 19 not only sets the channel frequencies f1 and f2 of the tuner sections 12a and 12b but also controls the switching section 18 using a switching control signal SW and the OFDM demodulator sections 16a and 16b using control signals CNTa and CNTb.

A description will now be made to the operation of the receiver 10 of the present example configured in this manner.

Suppose that the user manipulates a control portion (not shown) to select the channel number of a desired broadcast station. In this case, the system controller 19 provides the same channel frequencies f1 and f2 corresponding to the selected channel number (physical channel) to the tuner sections 12a and 12b. The system controller 19 also provides the switching control signal SW for the switching section 18 to switch to the output contact X, the control signal CNTb for the OFDM demodulator section 16b to stop its operation, and the control signal CNTa for the OFDM demodulator section 16a to perform a normal OFDM demodulation.

When the system controller 19 provides predetermined control in this manner, the receiver 10 is in the "normal reception mode."

Then, in the normal reception mode, the tuner sections 12a and 12b make a frequency conversion based on the local signal of the same channel frequencies f1 and f2 to output the intermediate-frequency signals (IF signals) of the same bandwidth to the ADCs 13a and 13b, respectively. Then, the FFT sections 14a and 14b output the same baseband signals Ba and Bb. Furthermore, the adder 15 sums (combines) the baseband signal Ba from the FFT section 14a and the baseband signal Bb supplied from the FFT section 14b via the switching section 18 to supply the resultant baseband signal Sa to the OFDM demodulator section 16a.
Then, following the instruction of the control signal CNTa, the OFDM demodulator section 16a performs the normal OFDM demodulation on the aforementioned resultant baseband signal Sa to reproduce the transport stream TSa. Then, the MPEG decoder 17a decodes the transport stream TSa, thereby allowing the contents of a broadcast program transmitted from the broadcast station such as images, sound, data, and station-specific service information (SI) like an electronic program guide (EPG) to be reproduced and delivered as the output signal Da.

In this instance, in the normal reception mode, the OFDM demodulator section 16a uses the first segment storage area through the thirteenth segment storage area of the shared memory MEM as a work area to perform time deinterleaving. For example, suppose that an HDTV broadcast program is transmitted in 13 segments without a simple moving image or an HDTV broadcast program is transmitted in 12 segment with a simple moving image. In these cases, the OFDM demodulator section 16a uses the first segment storage area through the thirteenth segment storage area of the shared memory MEM to perform time deinterleaving.

As such, in the normal reception mode, the tuner sections 12a and 12b of the two branches simultaneously receive the same physical channel broadcast, and the two baseband signals Ba and Bb delivered from the FFT sections 14a and 14b through the simultaneously reception are combined at the adder 15 for demodulation at the OFDM demodulator 16a.
This makes it possible to improve the C/N. Furthermore, in accordance with the output signal Da delivered from the MPEG decoder section 17a, images and sound can be reproduced through a monitor or speaker (not shown), thereby allowing for viewing and listening to digital terrestrial broadcasts in improved reception conditions.

Furthermore, the tuner sections 12a and 12b of the two branches simultaneously receive the same physical channel broadcast as described above in the normal reception mode. During this mode, to detect the reception sensitivity (CNR), the system controller 19 checks the level (amplitude) of the intermediate-frequency signal (IF signal), which is delivered every predetermined period T from the tuner section 12a of the receiver branch RXA.
Then, based on the result of the detection, the system controller 19 continues the reception operation in the normal reception mode when having determined that the reception sensitivity has been lowered. On the other hand, the system controller 19 maintains the channel frequency f1 of the tuner section 12a as it is when having determined that the reception sensitivity is high and the reception is being conducted under a good reception condition.
The system controller 19 also provides the switching control signal SW for the switching section 18 to be switched to the output contact Y, and at the same time, informs the OFDM demodulator sections 16a and 16b of the switching to the "switched mode" using the control signals CNTa and CNTb. Thereafter, in order to sequentially seek and receive the physical channel of each broadcast station, the system controller 19 changes the channel frequency f2 of the tuner section 12b.

When the system controller 19 sets the switched mode in this manner, control is started to receive station-specific service information (SI) such as an electronic program guide (EPG) sent separately from each broadcast station on different physical channels. Accordingly, the OFDM demodulator section 16a performs an OFDM demodulation on the baseband signal Ba supplied from the receiver branch RXA as the input signal Sa, while the OFDM demodulator section 16b performs an OFDM demodulation on the baseband signal Bb supplied via the switching section 18 from the receiver branch RXB as the input signal Sb.

Furthermore, in the switched mode, the OFDM demodulator section 16a uses the first segment storage area through the thirteenth segment storage area of the shared memory MEM as a work area to perform time deinterleaving. In contrast to this, the OFDM demodulator section 16b uses the partial reception storage area of the shared memory MEM as a work area to perform time deinterleaving.

That is, the OFDM demodulator section 16b uses the partial reception storage area for time deinterleaving of a simple moving image which is sent in the segment of layer A among the 13 segments of the physical channel that is being sought and received in the receiver branch RXb.

Then, the OFDM demodulator section 16b performs an OFDM demodulation on the simple moving image in layer A to reproduce the transport stream TSb, which is in turn decoded by the MPEG decoder section 17b. This allows station-specific service information (SI) such as an electronic program guide (EPG) sent separately from each broadcast station to be created and output as the output signal Db to an electronic program table creation portion (not shown) to create an integrated electronic program table.

Furthermore, during the aforementioned switched mode, the system controller 19 checks the level (amplitude) of the intermediate-frequency signal (IF signal) delivered from the tuner section 12a of the receiver branch RXA to detect the reception sensitivity (CNR) one by one. Then, when having determined that the reception condition is to degrade, the system controller 19 provides the switching control signal SW for the switching section 18 to be switched to the output contact X.
Furthermore, the system controller 19 changes the channel frequency f2 of the tuner section 12b back to the same frequency as the channel frequency f1 of the tuner section 12a, and informs the OFDM demodulator sections 16a and 16b using the control signals CNTa and CNTb that the normal reception mode (simultaneously reception mode) of operation was restored.

Then, back in the normal reception mode of operation, the system controller 19 checks the level (amplitude) of the intermediate-frequency signal (IF signal) delivered from the tuner section 12a of the receiver branch RXA to detect the reception sensitivity (CNR) one by one. Then, when having determined that a good reception condition is to be obtained, the system controller 19 is supposed to switch to the aforementioned switched mode and provide control again to create an electronic program table.

As such, the receiver 10 of the present example repeats the following steps. That is, the receiver 10 basically simultaneously receives the same physical channel in the receiver branches RXA and RXB, and switches to the switched mode of reception operation for creating an electronic program table every predetermined period T during the simultaneous reception.
Furthermore, when the reception condition degrades during the switched mode of reception operation, the receiver 10 switches to simultaneously receive the same physical channel in the receiver branches RXA and RXB in order to set a good reception condition. When a good reception condition is obtained again, the receiver 10 switches to the switched mode of reception operation to create an electronic program table.

Accordingly, such processing as for creating the latest electronic program table can be performed in parallel while a broadcast which is being viewed and listened to by the user is being received under a good reception condition.

Furthermore, the same physical channel is basically simultaneously received in the receiver branches RXA and RXB, thereby ensuring a good reception condition. On the other hand, switching to the switched mode for creating an electronic program table is performed during a good reception condition to allow the receiver branch RXb to receive the physical channel of each broadcast station. It is thus possible to make full use of the two receiver branches RXA and RXB.

Furthermore, the OFDM demodulator sections 16a and 16b are provided with one shared memory MEM, so that the OFDM demodulator section 16a uses the shared memory MEM to perform time deinterleaving during the aforementioned simultaneous reception (the normal reception mode). On the other hand, in the switched mode for creating the aforementioned electronic program table, the OFDM demodulator section 16a uses the storage area of the first segment storage area through the thirteenth segment storage area to perform time deinterleaving, while the OFDM demodulator section 16b uses the partial reception storage area to perform time deinterleaving. Accordingly, the storage capacity of the shared memory MEM for performing time deinterleaving can be significantly reduced. It is thus possible to reduce the receiver 10 in size and parts count.

## Claims

1. A receiver which has two receiver branches and OFDM demodulator means corresponding to each of the receiver branches, the receiver comprising:
- adder means for combining a baseband signal produced in the one receiver branch and a baseband signal produced in the other receiver branch and supplied via switching means for delivery to the one OFDM demodulator means;
- the switching means for exclusively and selectively supplying the baseband signal produced in the other receiver branch to the adder means or the other OFDM demodulator means; and
- shared memory means provided with a storage capacity required to perform time deinterleaving on one physical channel and a partial reception segment, the shared memory means serving as a work area for allowing the one and other OFDM demodulator means to perform time deinterleaving,
- wherein when the same physical channel is received in the two receiver branches, the switching means selectively supply the baseband signal produced in the other receiver branch to the adder means, and the one OFDM demodulator section performs time deinterleaving using the shared memory means as a work area; and
- wherein when mutually different physical channels are received in the two receiver branches, the switching means selectively supply the baseband signal produced in the other receiver branch to the other OFDM demodulator means and the one and other OFDM demodulator sections perform time deinterleaving using the shared memory means as a shared work area.

2. The receiver according to claim1,
wherein, when mutually different physical channels are received in the two receiver branches, the other OFDM demodulator means perform time deinterleaving on the partial reception segment.

3. The receiver according to claim 1 or 2,
wherein when mutually different physical channels are received in the two receiver branches, the other receiver branch sequentially tunes to receive broadcasts from each broadcast station on different physical channels.

4. The receiver according to any one of claims 1 to 3,
further comprising control means for detecting a reception sensitivity of the one receiver branch, and allowing the two receiver branches to receive mutually different physical channels when having determined that the reception sensitivity is good, and for allowing the other receiver branch to sequentially and selectively receive broadcasts from each broadcast station on different physical channels.

5. The receiver according to claim 4,
wherein the control means allow the other receiver branch to sequentially and selectively receive broadcasts from each broadcast station on different physical channels to thereby create an electronic program table.
